# EUROPEAN PATENT APPLICATION

(11) **EP 2 696 276 A1**
(43) Date of publication of application: **12.02.2014**
(21) Application number: 12179830.0
(22) Date of filing: 09.08.2012
(51) Int. Cl.: G06F 3/12

(54) **Automatic document conversion module**

(71) Applicant: Agfa Healthcare, 2640 Mortsel (BE)
(72) Inventor: Boel, Nikolas, 2640 Mortsel (BE); Wang, Samuel, 2640 Mortsel (BE); Xue, Linda, 2640 Mortsel (BE)

(57) **Abstract**

According to the invention the automatic document conversion module (30) is configured to convert the electronic document (10) by generating a converted electronic document (20) by applying a font size reduction routine (34) by reducing said font size of said electronic document (10) by a predetermined font size reduction amount; and
- if said converted electronic document (20) comprises a number of pages when printed that is less than said plurality of pages, end said conversion by storing said converted electronic document (20);
- else, end said conversion by storing said electronic document (10) without modification.

## Description

### Field of the Invention

The present invention generally relates to systems and methods for converting an electronic document comprising a plurality of pages when printed such that after conversion said electronic document comprises a number of pages when printed that is less than or equal to said plurality of pages.

### Background of the Invention

US7212309 and US7599094 describe methods and systems for automatically adjusting printing settings top optimize the fit of selected text, data and/or images on printed pages. These systems determine whether the selected text or data designated for printing may be printed on a single page, or whether multiple pages are required. The best fit of the test or data on a single or multiple pages is accomplished by incrementally adjusting a number of different print settings, such as margins scale and orientation, until an optimum fit of the test or data is achieved on a single page or on a set of pages. This system will apply every adjustment possible in order to fit the text or data on a single page. Only if the text or other data will not fit on a single page after the maximum adjustments are made in the printing values the method proceeds to a multiple page printing algorithm that will try to optimize the fit of the text or other data on multiple printed pages. This leads to an inefficient conversion process, especially in the context of a large number of electronic documents that are generated automatically, or electronic documents comprising text or other data comprising a plurality of pages of which the user only wants to avoid that the last page comprises for example two or three lines of text as the conversion process will always apply the maximum of effort to reduce the number of pages when printed to one or otherwise as less as possible. This holds the risk of leading to undesired scaling while incurring high operational load on the computing system performing this operation and/or high delays during execution of this operation. Furthermore there is required an interface with the printer driver for adjusting all required parameters in order to achieve a maximum reduction of the number of pages when the selected data is printed and the efforts of the conversion process need to be repeated for every print command issued.

A method and system for converting an electronic document is known from US2011/0119575. It describes a fit-to function which formats a word processing document to a fit-to page length by automatically adjusting document preference values. An algorithm is provided which specifies an order of adjusting document preference values as well as incremental adjustment values. According to this system a user has to input a desired fit-to page length, for example two and after clicking a fit-to button the fitting software automatically formats the document in order to assure the document fits two pages. Also here there is the inconvenience that an operator needs to determine beforehand what the optimal number of pages for the electronic document should be, again leading to an inefficient conversion process, especially in the context of a large number of electronic documents that are generated automatically, or electronic documents comprising text or other data comprising a plurality of pages of which the user only wants to avoid that the last page comprises for example two or three lines of text as the conversion process will always apply the maximum of effort to fit the number of pages when printed to the predetermined fit-to page length.

Therefor there still exists a need for a system and method for converting an electronic document comprising a plurality of pages when printed such that after conversion said electronic document comprises a number of pages when printed that is less than or equal to said plurality of pages that is able to operate more efficiently especially in the case that a large number of electronic documents need to be converted automatically and of which the user only wants to avoid the last page comprising a few additional lines of text.

### Summary of the Invention

According to a first aspect of the invention there is provided an automatic document conversion module configured to convert an electronic document comprising a plurality of pages when printed such that after conversion said electronic document comprises a number of pages when printed that is less than or equal to said plurality of pages,
CHARACTERIZED IN THAT
said automatic document conversion module is further configured to convert said electronic document by:
- determining said plurality of pages and the font size of said electronic document when printed; and
- generating a converted electronic document by applying a font size reduction routine by reducing said font size of said electronic document by a predetermined font size reduction amount; and
- if said converted electronic document comprises a number of pages when printed that is less than said plurality of pages, end said conversion by storing said converted electronic document;
- else, end said conversion by storing said electronic document without modification.

In this way the document conversion can be executed more efficiently as only an acceptable modification of the font size will be tried for removing a last page with insufficient content. This process can be easily executed in an automated way as no user interaction is required because the focus of the conversion is on trying to remove a last page with insufficient content instead of fitting the electronic document on a predetermined number of pages when printed.

According to an embodiment said automatic document conversion module is further configured to convert said electronic document by:
- repeating said font size reduction routine, while the count of said repetitions does not exceed a predetermined maximum font size reduction count, on said converted electronic document until said converted electronic document comprises a number of pages when printed that is less than said plurality of pages.

In this way the effect of the font size reduction is minimal for each specific electronic document being converted, while there is added flexibility which increases the number of documents that can be efficiently converted.

According to a preferred embodiment said automatic document conversion module is further configured to convert said electronic document by:
- determining a usage rate of the last page of said electronic document; and
- generating said converted electronic document by applying said font size reduction routine only if said usage rate is below a predetermined usage rate threshold; and
- else, end said conversion by storing said electronic document without modification.

In this way only computing power is spent on conversion processes with a high probability of successfully reducing the plurality of pages of the electronic document after conversion.

According to an embodiment said usage rate is determined in function of the position of the last line of text on said last page.

According to a further embodiment said usage rate is determined in function of the number of lines of text on said last page.

This allows to determine the usage rate in a simple and efficient way.

According to a second aspect of the invention there is provided a computing system comprising an automatic document conversion module according to the first aspect of the invention.

According to a third aspect of the invention there is provided a method for automatically converting an electronic document electronic document comprising a plurality of pages when printed such that after conversion said electronic document comprises a number of pages when printed that is less than or equal to said plurality of pages, by means of an automatic document conversion module according to the first aspect of the invention, **characterised in that** said method comprises the steps of:
- converting said electronic document by:
- determining said plurality of pages and the font size of said electronic document when printed; and
- generating a converted electronic document by applying a font size reduction routine by reducing said font size of said electronic document by a predetermined font size reduction amount; and
- if said converted electronic document comprises a number of pages when printed that is less than said plurality of pages, end said conversion by storing said converted electronic document;
- else, end said conversion by storing said electronic document without modification.

According to a fourth aspect of the invention there is provided a computer program product adapted to carry out the method according to the third aspect of the invention when run on a computer.

According to a fifth aspect of the invention there is provided a computer readable medium comprising computer-executable instructions which, when executed by a computing system, perform a method according to the third aspect of the invention.

### Brief Description of the Drawings

Fig. 1 and 2 schematically illustrate alternative embodiments of the automatic document conversion module according to the invention;

Fig. 3 schematically illustrates a user interface for enabling the automatic document conversion module and setting some of its parameters; and

Fig. 4 schematically illustrates a suitable computing system for hosting the document conversion module of Fig. 1.

### Detailed Description of Embodiment(s)

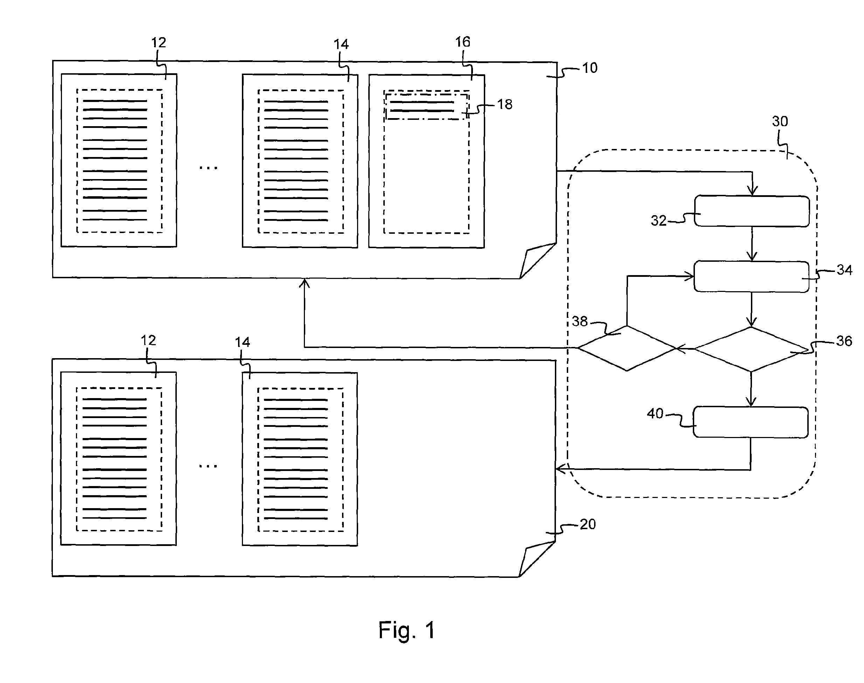

Figure 1 shows schematically the operation of an automatic document conversion module 30. Such an automatic document conversion module 30 is for example implemented as a software application comprising suitable programming instructions for execution by a processor of a computing system. Alternatively it could form a component of a software application, for example in the form of an application module, by means of a programming library, as network component being accessible through a suitable application program interface, or any other suitable implementation. The automatic document conversion module 30 is especially beneficial when being part of a system that automatically generates a large number of electronic documents 10 comprising a plurality of pages when printed or when electronic documents comprising a large number of pages when printed. This is for example the case in the context of a workflow management application in a medical imaging environment, such software application is for instance important in medical applications such as radiology, where a technician makes medical images of a patient (e.g. an x-ray scan, a CT scan, an MRI scan, an ultrasound scan, etc.), a radiologist interprets the medical images, a transcriptionist produces a report reflecting the radiologists' interpretation, and a clinician receives the report and advises the patient. The individuals involved in the entire workflow may be working at a single facility (e.g. a hospital or imaging centre) or may be working at different locations (e.g. a hospital or enterprise with multiple facilities). The workflow application automatically generates a plurality of electronic documents 10 that form printable reports for each of these individuals comprising the necessary data for performing their task at hand.

As schematically shown in Figure 1 such an electronic document 10 may comprise a plurality of pages 12, 14, 16 when printed each with a plurality of lines of text. It is clear that next to text content the electronic document 10 could also comprise other data such as for example images, tables, graphical representations of measurement values, .... As clearly visible the last page 16 of the electronic document 10 shown in Figure 1 comprises only a limited amount of text, for example two additional lines of text. This is annoying for the individual being confronted with the electronic document 10 when printed as the information presented on the last page 16 is then isolated from that on the last but one page 14. Furthermore, especially in large scale institutions where a large number of such electronic documents 10 are generated and printed, this leads to an increase in paper consumption which seems avoidable. Although as explained above several systems exist to convert an electronic document 10 comprising a plurality of pages when printed such that after conversion said electronic document 10 comprises a number of pages when printed that is less than or equal to said plurality of pages, these systems require manual intervention, are resource intensive which leads to undesired delays when generating a large number of reports and often require a complex interface with the printer settings.

The automatic document conversion module 30 according to the invention is able to accomplish this far more efficiently. In order to convert the electronic document 10 by the automatic document conversion module 30 first determines at step 32 the plurality of pages and the font size when printed. This determination can be effected in an automated and simple way by for example suitable instructions from the workflow application to a general purpose word processor application being used for viewing, formatting and/or printing the electronic document 10. It is for example determined that the plurality of pages is 5 pages and that the font size of the text is 14 point. Subsequently at step 34 a font size reduction routine is applied to the electronic document 10 generating a converted electronic document 20 by reducing the font size of the electronic document 10 by a predetermined font size reduction amount. This predetermined font size reduction amount could for example be 1 point, which would thus result in a converted document 20 of which the font size is 13 point being 14 point reduced by 1 point. At step 36 the automatic document conversion module 30 checks the number of pages of this converted electronic document 20 when printed. If this number of pages is less than the plurality of pages of the electronic document 10 before conversion, this means that the font size reduction was successful in reducing the number of pages and the two lines of text that were originally on the last page 16 of the electronic document 10 have now been shifted to the one but last page 14 of the electronic document, which now forms the last page 14 of the converted electronic document 20. In this case the conversion is ended at step 40 by storing the converted electronic document 20, which could be implemented by the workflow application instructing the general purpose word processing application to store the converted electronic document 20 with the reduced font size. However when at step 36 the automatic document conversion module 30 checks the number of pages of the converted electronic document 20 and finds that the number of pages is not less than the plurality of pages of the electronic document 10 before conversion, according to a simple embodiment of the automatic document conversion module 30, the conversion is ended by storing the electronic document 10 without modification. In this way an efficient automatic conversion of the electronic document 10 can be implemented, which only consumes limited computing resources and does not require extensive access to printing parameters.

However according to the embodiment shown in Figure 1, the automatic document conversion module 30 at step 38 will decide to repeat the font size reduction routine 34 on the converted electronic document 20, while the count of the repetitions does not exceed a predetermined maximum font size reduction count of for example three, four, five or any other suitable number. After every iteration of the font size reduction routine 34 on the converted electronic document 20 at step 36 it will be checked whether the converted electronic document 20 comprises a number of pages when printed that is less than the plurality of pages. If this is the case then the converted electronic document 20 will be stored at step 40. However, for example in the case where the maximum font size reduction count is three, and after three iterations the 14 point font size has been reduced three times by 1 point to a font size of 11 point and at step 36 the automatic document conversion module 30 checks the number of pages of the converted electronic document 20 and finds that the number of pages is not less than the plurality of pages of the electronic document 10 before conversion, subsequently at step 38 the conversion will be ended by storing the electronic document 10 without modification. In this way the effect of the font size reduction is minimal for each specific electronic document 10 being converted, while there is a flexibility of increasing the number of documents that can be efficiently converted.

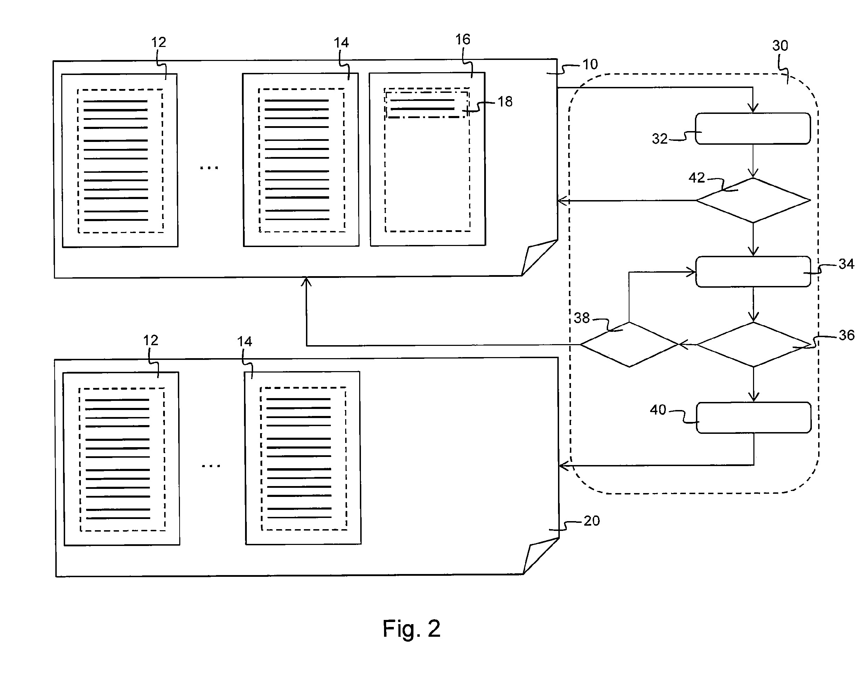

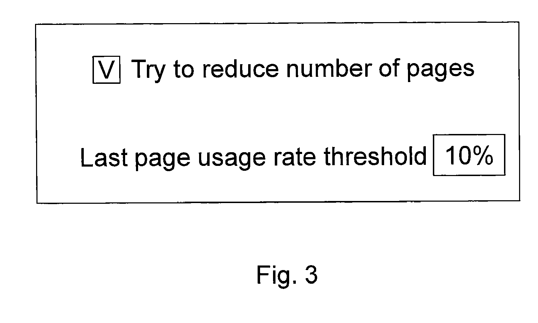

In order to still further increase the efficiency of the automatic document conversion module 30 according to the embodiment shown in Figure 2, which is similar to the embodiment of Figure 1 with the addition of step 42 at which the automatic document conversion module 30 determines a usage rate 18 of the last page 16 of the electronic document 10. This usage rate 18 is a parameter indicating the how much of the printable area of the last page of the electronic document will be filled with text or other data when printed. The usage rate 18 could for example be expressed in the form of a percentage. If the printable area of the last page 16 is completely filled with text or other data when printed this percentage would be 100%, if the last page 16 is only half filled the percentage would be 50%, and it is clear that every other possible ratio of the area filled by text or other data versus the printable area is possible. Only if the usage rate of the last page 16 of the electronic document 10 is below a predetermined usage rate threshold, the generation of the converted electronic document 20 by applying the font size reduction routine 34 is initiated; else, the conversion process is ended by storing the electronic document 10 without modification. In this way only computing power is spent on conversion processes with a high probability of successfully reducing the plurality of pages of the electronic document after conversion. Figure 3 shows an embodiment of a user interface of for example the workflow application for activating the automatic document conversion module 30 by means of a check box and inputting a parameter such as the usage rate threshold as a percentage.

According to an embodiment the usage rate is determined in function of the position of the last line of text on the last page 16. If the printable area of the last page 16 of the electronic document 10 when printed spans for example 20 cm and the position of the last line of text is at 10 cm from the start of the printable area, then the usage rate would be 50%. According to an alternative embodiment the usage rate 18 is determined in function of the number of lines of text on the last page 16. For example if the printable area of the last page 16 can hold 35 lines of text and when it holds 5 lines of text, then the usage ratio is about 14.3%.

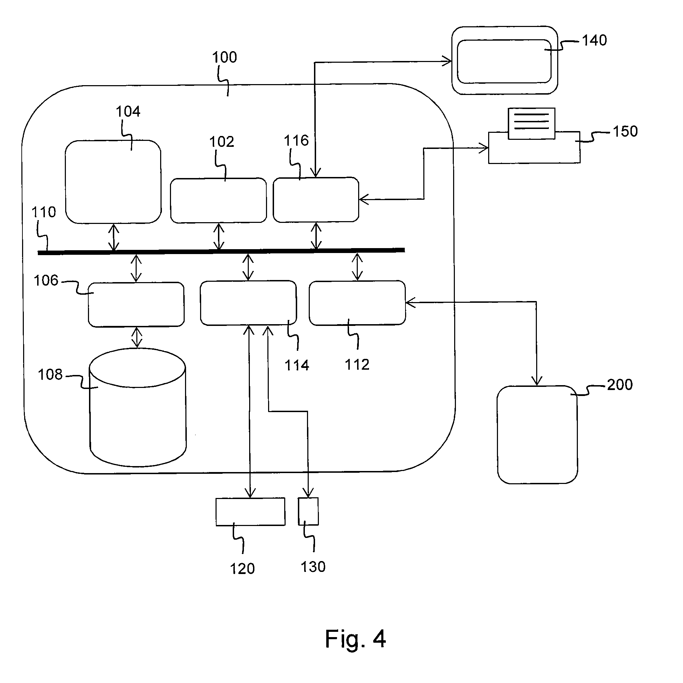

Figure 4 shows a suitable computing system 100 for hosting the document conversion module 30 of Figures 1 or 2. Computing system 100 may in general be formed as a suitable general purpose computer and comprise a bus 110, a processor 102, a local memory 104, one or more optional input interfaces 114, one or more optional output interfaces 116, a communication interface 112, a storage element interface 106 and one or more storage elements 108. Bus 110 may comprise one or more conductors that permit communication among the components of the computing system. Processor 102 may include any type of conventional processor or microprocessor that interprets and executes programming instructions. Local memory 104 may include a random access memory (RAM) or another type of dynamic storage device that stores information and instructions for execution by processor 102 and/or a read only memory (ROM) or another type of static storage device that stores static information and instructions for use by processor 104. Input interface 114 may comprise one or more conventional mechanisms that permit an operator to input information to the computing device 100, such as a keyboard 120, a mouse 130, a pen, voice recognition and/or biometric mechanisms, etc. Output interface 116 may comprise one or more conventional mechanisms that output information to the operator, such as a display 140, a printer 150, a speaker, etc. Communication interface 112 may comprise any transceiver-like mechanism such as for example two 1 Gb Ethernet interfaces that enables computing system 100 to communicate with other devices and/or systems, for example mechanisms for communicating with one or more other computing systems 200. The communication interface 112 of computing system 100 may be connected to such another computing system by means of a local area network (LAN) or a wide area network (WAN, such as for example the internet, in which case the other computing system 200 may for example comprise a suitable web server. Storage element interface 106 may comprise a storage interface such as for example a Serial Advanced Technology Attachment (SATA) interface or a Small Computer System Interface (SCSI) for connecting bus 110 to one or more storage elements 108, such as one or more local disks, for example 1TB SATA disk drives, and control the reading and writing of data to and/or from these storage elements 108. Although the storage elements 108 above is described as a local disk, in general any other suitable computer-readable media such as a removable magnetic disk, optical storage media such as a CD or DVD, -ROM disk, solid state drives, flash memory cards, ... could be used.

The automatic document conversion module 30 can be implemented as programming instructions stored it local memory 104 of the computing system 100 for execution by its processor 102. Alternatively the automatic document conversion module 30 could be stored on the storage element 108 or be accessible from another computing system 200 through the communication interface 112. The same holds for the electronic document 10 which could also be suitably accessible for processing by the automatic document conversion module 30 from the local memory 104, the storage element 108 or another computing system 200.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An automatic document conversion module (30) configured to convert an electronic document (10) comprising a plurality of pages when printed such that after conversion said electronic document (10) comprises a number of pages when printed that is less than or equal to said plurality of pages,
**CHARACTERIZED IN THAT**
said automatic document conversion module (30) is further configured to convert said electronic document (10) by:
- determining said plurality of pages and the font size of said electronic document (10) when printed; and
- generating a converted electronic document (20) by applying a font size reduction routine (34) by reducing said font size of said electronic document (10) by a predetermined font size reduction amount; and
- if said converted electronic document (20) comprises a number of pages when printed that is less than said plurality of pages, end said conversion by storing said converted electronic document (20);
- else, end said conversion by storing said electronic document (10) without modification.

2. An automatic document conversion module according to claim 1, **characterised in that** said automatic document conversion module (30) is further configured to convert said electronic document (10) by:
- repeating said font size reduction routine (34), while the count of said repetitions does not exceed a predetermined maximum font size reduction count, on said converted electronic document (20) until said converted electronic document (20) comprises a number of pages when printed that is less than said plurality of pages.

3. An automatic document conversion module according to claim 1 or 2, **characterised in that** said automatic document conversion module (30) is further configured to convert said electronic document (10) by:
- determining a usage rate of the last page of said electronic document (10); and
- generating said converted electronic document (20) by applying said font size reduction routine (34) only if said usage rate is below a predetermined usage rate threshold; and
- else, end said conversion by storing said electronic document (10) without modification.

4. An automatic document conversion module according to claim 3, **characterised in that** said usage rate is determined in function of the position of the last line of text on said last page.

5. An automatic document conversion module according to claim 3, **characterised in that** said usage rate is determined in function of the number of lines of text on said last page.

6. A computing system (100) comprising an automatic conversion module (30) according to any of the preceding claims.

7. A method for automatically converting an electronic document electronic document (10) comprising a plurality of pages when printed such that after conversion said electronic document (10) comprises a number of pages when printed that is less than or equal to said plurality of pages, by means of an automatic document conversion module (30) according to any of the claims 1 to 6, **characterised in that** said method comprises the steps of:
- converting said electronic document by:
- determining said plurality of pages and font size of said electronic document (10) when printed; and
- generating a converted electronic document (20) by applying a font size reduction routine (34) by reducing said font size of said electronic document (10) by a predetermined font size reduction amount; and
- if said converted electronic document (20) comprises a number of pages when printed that is less than said plurality of pages, end said conversion by storing said converted electronic document (20);
- else, end said conversion by storing said electronic document (10) without modification.

8. A method according to claim 7, **characterised in that** said method comprises the further steps of:
- repeating said font size reduction routine (34), while the count of said repetitions does not exceed a predetermined maximum font size reduction count, on said converted electronic document (20) until said converted electronic document (20) comprises a number of pages when printed that is less than said plurality of pages

9. A method according to claims 7 or 8, **characterised in that** said method comprises the further steps of:
- determining a usage rate of the last page of said electronic document (10); and
- generating said converted electronic document (20) by applying said font size reduction routine (34) only if said usage rate is below a predetermined usage rate threshold; and
- else, end said conversion by storing said electronic document (10) without modification.

10. A method according to claim 9, **characterised in that** said usage rate is determined in function of the position of the last line of text on said last page.

11. A method according to claim 9, **characterised in that** said usage rate is determined in function of the number of lines of text on said last page.

12. A computer program product adapted to carry out the method according to any of the claims 7 to 11 when run on a computer.

13. A computer readable medium comprising computer-executable instructions which, when executed by a computing system, perform a method according to any of the claims 7 to 11.
